# EUROPÄISCHE PATENTSCHRIFT

(11) **EP 1 092 908 B1**
(45) Veröffentlichungstag und Bekanntmachung des Hinweises auf die Patenterteilung: **17.03.2004**
(21) Anmeldenummer: 00122190.2
(22) Anmeldetag: 13.10.2000
(51) Int. Cl.: F16L 27/04, F16L 27/08

(54) **Verbindung von Rohrleitungen**
Pipe coupling
Raccord de tuyaux

(30) Priorität: 13.10.1999 DE 19949723
(43) Veröffentlichungstag der Anmeldung: 18.04.2001
(73) Patentinhaber: Uponor Anger GmbH, 45768 Marl (DE)
(72) Erfinder: Guldner, Markus, 45966 Gladbeck (DE)
(74) Vertreter: Gehrke, Peter P.

(56) Entgegenhaltungen:
- WO-A-87/00601
- DE-A- 3 807 168
- FR-A- 2 307 211
- US-A- 2 381 426

## Beschreibung

Die Erfindung betrifft eine Rohrkupplung aus einer ersten Strömungsmittelleitung mit einer Muffe und einer zweiten Strömungsmittelleitung zur strömungsmitteldichten und strömungsmittelgünstigen Verbindung derselben, wobei das eine Kopfende der zweiten Strömungsmittelleitung in der Muffe beweglich und dichtend angeordnet ist.

Im Stand der Technik sind Kompensationsverschraubungen zu Verbindung von Rohrleitungen in einer zur Aufnahme der Achslinienverschiebung zwischen den Rohrleitungen geeigneten Weise bekannt. So beschreibt DE 26 16 072 Kompensationsverschraubungen, die einen an die Rohrleitungen mittels eines Schraubengewindes zu befestigenden, an seiner Außenseite mit einem Schraubengewinde, an seiner Innenseite mit einem exzentrisch angeordneten, eine kegelige Oberfläche aufweisenden Hohlraum versehenen Rohrstutzen, einen an die Rohrleitung mittels eines Schraubengewindes zu befestigenden, in einer mit einer exzentrisch angeordneten kegeligen Fläche versehenen Ansatzes endenden Schraubstutzen und eine exzentrische Überwurfmutter besitzen.

Es zeigt sich aber, dass die herkömmlichen Kompensationsverschraubungen lediglich Winkellagen von Rohrverbindungen von wenigen Winkelgraden ermöglichen Es erweist es sich jedoch, dass gerade Rohrverbindungen erforderlich sind, um eine darüber hinausgehende Beweglichkeit der Rohrverbindungen zwecks Anpassung derselben an unterschiedliche örtliche Gegebenheiten zu ermöglichen. Überdies treten bei den herkömmlichen Kompensationsverschraubungen sowie bei andern herkömmlichen Rohrkupplungen im Innern Rillen und Kanten auf, so dass deren Gerinne nicht fluchtend und bündig, sondem diese sich vielmehr als strömungshindernde Widerstände erweisen sowie sogenannte Toträume entstehen, in denen sich die Schwebstoffe aus den Abwässern abzulagern vermögen und unter Umständen zur Verstopfung der Rohrkupplungen führen können

Auch ist die in der DE/2616072 offenbarte Lehre nicht dazu geeignet, Kompensationsverschraubungen zur Verbindung von Rohrleitungen des kunststoffartigen Typs oder aus Kunststoffmaterialien zu verwenden, da Undichtigkeiten zwischen dem an der Rohrleitung zu befestigenden mit einem Schraubengewinde versehenen Ende mit einer exzentrischen Hülse bei dauerhaftem Gebrauch auftreten. Zudem finden sich wegen des Vorhandenseins von Rillen und Kanten in deren Innenraum kein strömungsgünstige Weiterfuhren von Flüssigkeiten. Hinzutretend sind bei herkömmlichen Rohrkupplungen die Dichtungsringe von außen mechanischen Eingriffen zugänglich und insofern ungeschützt, so dass Undichtigkeiten bereits bei Verbinden derselben an Rohrleitungen drohen.

Aufgabe der Erfindung ist es, eine Rohrkupplung bereitzustellen, die eine hinreichende Dichtigkeit der Verbindung über eine lange Gebrauchsdauer ermöglicht, eine stufenlosen Winkellage der verbundenen Rohre ermöglicht und darüber hinaus vor Ort die Verbindung von Rohrleitungen mit kleinen oder größeren Winkellagen auch für den weniger geübten Benutzer ermöglicht.

Aufgabe der Erfindung ist es, dass eine Rohrkupplung bereitgestellt werden soll, die einfach und leicht handhabbar ist und welche sowohl kleine Richtungsabweichungen als auch die Ausrichtung von Rohren größerer Winkellagen stufenlos ermöglicht, ohne dass ein zeitaufwendiger Aufwand und ein mechanischer Eingriff in die Rohrkupplung erforderlich ist Hinzukommend soll die Rohrkupplung eine hinreichende Dichtigkeit bereitstellen, ohne dass Strömungsmittel von innen nach außen oder von außen in das Innere der Rohrleitungen zu gelangen vermögen. Weiterhin soll die Dichtung nicht von außen zugänglich sein, um nicht mechanisch beschädigt zu werden sowie eine dauerhafte Dichtung zu ermöglichen

Zudem soll bei der stufenlosen Einstellung der Winkellagen der zu verbindenden Rohre eine Einschränkung oder Verengung des inneren Durchmessers von denselben nicht im wesentlichen auftreten, so dass im Gegensatz zum Stand der Technik in Strömung ragende Ecken und Kanten des Gerinnes der Rohrkupplung Sedimentationen der Schwebstoffe und Feststoffe aus Abwässern vermieden und kostspielig zu beseitigende Verstopfungen der Abwasserrohre umgangen werden. Überdies soll die Rohrkupplung von geringer Baulänge sein, um möglichst die Maße der die Rohrkupplung aufzunehmenden Aushebungen oder Schächte gering zu halten.

Die Aufgaben werden gelöst durch den Hauptanspruch. Die Unteransprüche betreffen bevorzugte Ausgestaltungen des Erfindungsgegenstandes.

Die Erfindung betrifft eine Rohrkupplung aus einer ersten Strömungsmittelleitung mit einer Muffe und einer zweiten Strömungsmittelleitung zur strömungsmitteldichten und strömungsmittelgünstigen Verbindung derselben, wobei die erste Strömungsmittelleitung eine Mitte-Längsachse A und die zweite Strömungsmittelleitung eine Mitte-Längsachse B haben und das eine Kopfende der zweiten Strömungsmittelleitung in der Muffe beweglich angeordnet ist, die dadurch gekennzeichnet ist, dass
a. die erste Strömungsmittelleitung eine des schräg abgeschnittenen Typs ist, wobei diese an ihrem ersten Ende einen Zylinderabschnitt mit einem Neigungswinkel α aufweist,
b. an das obere Ende des Zylinderabschnitts sich ein Mantel des gleichförmigen Kugelscheibentyps oder gleichförmigen Kugelzonentyps als Muffe anschließt,
c. die zweite Strömungsmittelleitung an ihrem einen Kopfende mit einem balligen Kopfstück versehen ist, welches in dem Mantel beweglich gelagert ist, der Innenraum des Kopfendes zylinderförmig mit einer Mitte-Längsachse B ausgebildet ist, vorzugsweise das Kopfende mindestens eine oder zwei Ringflächen in Richtung der Mitte-Längsachse B aufweist, die beiden Ringflächen die gemeinsame Mitte-Längsachse B haben, vorzugsweise die Mitte-Längsachsen B der Ringflächen mit der Mitte-Längsachse B der zweiten Strömungsmittelleitung übereinstimmen,
d. die zweite Ringfläche eine des schräg abgeschnittenen Typs mit einem Neigungswinkel χ ist, der Betrag des Neigungswinkels χ mit dem Betrag des Neigungswinkels α übereinstimmt,
e. die Außenfläche des Kopfstücks von kugelscheibenartiger Ausbildung des ungleichförmigen Typs ist, die kugelscheibenartige Außenfläche eine der ersten Strömungsmittelleitung zugewandte erste Schnittebene und eine der ersten Strömungsmittelleitung abgewandte zweite Schnittebene hat, wobei die Mitte-Längsachse B der zweiten Ringfläche den Mittelpunkt M der der ersten Strömungsmittelleitung zugewandten ersten Schnittebene der Außenfläche zu schneiden vermag,
f. vorzugsweise das Kopfstück an seiner Außenseite einen in einer Nut geführten umlaufenden Dichtring hat,
g. das Kopfstück mit seiner Mitte-Längsachse B in dem Mantel angeordnet ist, wobei die Mitte-Längsachse B der ersten Ringfläche und / oder zweiten Ringfläche die Mitte-Längsachse A der ersten Strömungsmittelleitung unter Bildung des Winkels λ schneidet.

Ein weiterer Gegenstand der Erfindung betrifft eine Schachtbodenanordnung mit einem aufrechtstehenden Schachtrohr, an welchem im unteren Bereich des Schachtrohrs mindestens ein Rohr angeformt ist, welches mit dem Innenraum des Schachtrohrs flüssigkeitsmaßig in Verbindung steht, die dadurch gekennzeichnet ist, dass an dem Rohr mindestens eine erfindungsgemäße Rohrkupplung gekoppelt ist. Ebenso kann das dem Schachtrohr der erfindungsgemäßen Schachtbodenanordnung abgewandte Ende des Rohrs ein Ende des schräg abgeschnittenen Typs sein und einen Zylinderabschnitt mit einem Neigungswinkel α aufweisen. An das obere Ende des Zylinderabschnitts kann sich ein Mantel des gleichförmigen Kugelscheibentyps als Muffe zur Aufnahme des balligen Kopfstucks einer zweiten Rohrleitung anschließen, welches in dem Mantel beweglich gelagert ist

Unter Schachtrohr kann im Sinne der Erfindung auch verstanden werden, ein begehbarer oder nichtbegehbarer Schacht oder ein beliebiger Hohlraum in der Regel unterhalb oder in der Erde zum Beispiel einer Straße, welcher nach oben hin verschlossen ist bzw verschließbar sein kann; das Schachtrohr, z.B. eine Steigleitungsanordnung, kann ebenfalls z.B. an seinem oberen Ende Schachtringe, Übergangsring, Konus oder Schachthals, Auslagering und Schachtdeckel und dergleichen aus Kunststoff und / oder sonstigen Materialien, wie Beton oder dergleichen, aufweisen. Im unteren Bereich umfasst das Schachtrohr eine Sohle mit einem auf der Oberseite der Sohle angeordneten Gerinne Im unteren Bereich des Schachtrohrs können ein oder mehrere Rohre, z.B. drei nebeneinander angeordnete Rohre und ein gegenüber liegendes Rohr, angeformt sein, die zur Ableitung und / oder Zuleitung von Abwasser verzweigend, wie rechtsseitig und / oder linksseitig, ausgebildet sind Die Rohre sind flüssigkeitsmäßig mit dem Gerinne bzw. dem Schachtrohr verbunden.

Vorzugsweise entspricht die Summe aus dem Betrag des Neigungswinkels α und dem Betrag des Neigungswinkels χ dem Betrag des Winkels λ. Das Kopfstück kann mit seiner Außenfläche an der Innenfläche des Mantels derart beweglich angeordnet sein, dass die Mittelpunkte der Kugeln als Kugelmittelpunkt, aus denen die kugelscheibenförmige Innenfläche des gleichförmigen Typs des Mantels und aus denen die kugelscheibenförmige Außenfläche des ungleichförmigen Typs des Kopfstücks herausgeschnitten sind, in einem gemeinsamen Kugelmittelpunkt K zusammenfallen. Ebenso kann der Kreismittelpunkt des Dichtrings mit dem Kugelmittelpunkt K zusammenfallen. Die Mittelpunkte der Kugeln als Kugelmittelpunkt, aus denen die kugelscheibenförmige Innenfläche des gleichförmigen oder ungleichförmigen Typs des Mantels und aus denen die kugelscheibenförmige Außenfläche des ungleichförmigen Typs des Kopfstücks herausgeschnitten sein können, können in einem gemeinsamen Kugelmittelpunkt K zusammen. Der Kreismittelpunkt des Dichtungsrings fällt mit dem Kugelmittelpunkt K zusammen.

Unter bewegliche Lagerung der zweiten Strömungsmittelleitung mit Kopfstück in der Muffe wird im Sinne der Erfindung auch verstanden, dass die zweite Strömungsmittelleitung in der Muffe der ersten Strömungsmittelleitung derart gedreht oder geschwenkt werden kann, dass die Mitte-Längsachse A der ersten Strömungsmittelleitung und die Mitte-Längsachse B der zweiten Strömungsmittelleitung um die Hilfsmittelachse H unabhängig voneinander und vorzugsweise auf einer den Mitte-Längsachsen A und B gemeinsamen Kreisbahn angeordnet sein bzw. eine solche beschreiben können. Die zweite Strömungsmittelleitung kann mit ihrer Mitte-Längsachse B um die Hilfsmittelachse H als Drehachse der zweiten Strömungsmittelleitung gedreht werden, z.B. in eine solche Lage, dass die Mittelängsachse B mit der Mitte-Längsachse A zusammenfällt, oder in eine solche Lage, dass die Hilfsmittelachse H in der Draufsicht auf das Kopfstück längs der Hilfsmittelachse H zwischen der Mitte-Längsachse A und der Mittelängsachse B angeordnet ist, die Hilfsmittelachse H kann in dieser Lage von einer Geraden, welche die Mitte-Längsachse A und der Mittelängsachse B schneidet, geschnitten werden.

Die zweite Strömungsmittelleitung und die erste Strömungsmittelleitung können derart zueinander ausrichtbar bzw. beweglich sein, dass die Mitte-Längsachse A und die Mitte-Längsachse B den gemeinsamen Schnittpunkt S haben, der mit dem Mittelpunkt M der der ersten Strömungsmittelleitung zugewandten ersten Schnittebene der Außenfläche des Kopfstücks zusammenfällt.

Unter Hilfsmittelachse H wird im Sinne der Erfindung auch eine Gerade verstanden, die die Mittelpunkte der Kugeln, aus welcher der kugelscheibenförmige Mantel bzw. seine kugelscheibenförmige Innenfläche, vorzugsweise des gleichförmigen Typs, und aus welcher das kugelscheibenförmige Kopfstück bzw. seine kugelscheibenförmige Außenfläche des ungleichförmigen Typs herausgeschnitten sind, und den Mittelpunkt M der der ersten Strömungsmittelleitung zugewandten ersten Schnittebene der Außenfläche schneidet. Die Hilfsmittelachse H kann senkrecht zu der Grundfläche des Zylinderabschnitts ausgerichtet sein.

Unter Kugelmittelpunkt wird im Sinne der Erfindung auch der Mittelpunkt der Kugel verstanden, wobei die Mittelpunkte der Kugel, aus der der kugelscheibenförmige Mantel bzw seine kugelscheibenförmige Innenfläche herausgeschnitten ist, und der Mittelpunkt, aus der das kugelscheibenförmige Kopfstück bzw. seine kugelscheibenförmige Außenfläche herausgeschnitten ist, übereinstimmen und daher zusammenfallen; das Kopfstück und die Muffe sind so miteinander auszurichten, dass diese einen gemeinsamen Kugelmittelpunkt haben können.

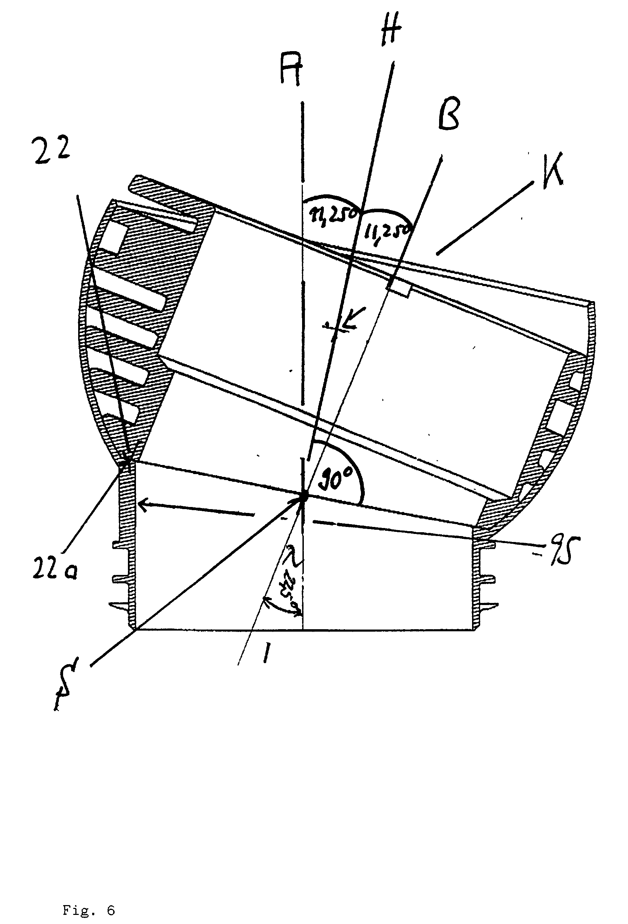

So kann die erste Strömungsmittelleitung mit der zweiten Strömungsmittelleitung derart miteinander ausgerichtet sein, dass die Mitte-Längsachse A mit der Mitte-Längsachse B koaxial ist, dann ist die Abwinklung der ersten von der zweiten Strömungsmittelleitung gleich null mit dem Winkel λ gleich 0;
die Mitte-Längsachsen A und B können zu der Hilfsmittelachse H derart zueinander ausgerichtet sein, dass das Ausmaß der Abwinklung der ersten von der zweiten Strömungsmittelleitung am größten ist, so kann der Winkel λ vorzugsweise 22,5 ° betragen (Fig 6),
die Mitte-Längsachsen A und B können auch zu der Hilfsmittelachse H derart zueinander ausgerichtet sein, dass vorzugsweise der Winkel λ größer als 0 und kleiner als 22,5 ° ist. So kann der von der Mitte-Längsachse A und der Hilfsmittelachse H umschlossene Winkel dem von der Mitte-Längsachse B und der Hilfsmittelachse H umschlossenen Winkel entsprechen (Fig. 6).

Denn der von Mitte-Längsachse B und H umschlossene Winkel bleibt stets konstant, der von Mitte-Längsachse A und H umschlossene Winkel bleibt stets konstant,
da H durch die Grundfläche des Zylinderabschnitt bestimmt wird, weil H senkrecht zu dieser ausgerichtet ist und
A durch erste Strömungsmittelleitung bestimmt werden.
der Winkel λ ist der von der Mitte-Längsachse A der ersten Strömungsmittelleitung und der Mitte-Längsachse B der zweiten Strömungsmittelleitung umschlossene Winkel.

Die erfindungsgemäße Rohrkupplung ermöglicht die Verbindung von zwei Strömungsmittelleitungen, wobei die Winkellagen der zu verbindenden Strömungsmittelleitungen stufenlos und über einen hinreichend großen Bereich, vorzugsweise von 0 bis 22,5°, vor Ort ohne besondere Eingriffe und Maßnahmen überraschenderweise eingestellt werden können.

Unter Strömungsmittelleitung wird im Sinne der Erfindung jede Leitung zu verstehen sein, die Strömungsmittel, wie Wasser, z.B. mit Schwebteilchen und / Festteilchen beladene Abwässer, Gase, Lösungen, umfassen können. Die Strömungsmittelleitung kann eine hohlzylinderförmige, beispielsweise eine Rohrleitung, sein.

Die erste Strömungsmittelleitung ist eine des schräg abgeschnittenen Typs.

Unter schräg abgeschnittenem Typ wird im Sinne der Erfindung eine hohlzylinderförmige Leitung verstanden, wobei die Leitung einen geraden Hohlzylinder und einen an den Hdhlzylinder sich anschließenden Zylinderabschnitt umfaßt, das eine dem Hohlzylinder abgewandte Ende des Zylinderabschnitts, als Deckfläche bezeichnet, abgeschrägt oder schief abgeschnitten ist und nicht quer zu der Mitte-Längsachse des Hohlzylinders angeordnet ist. Der Zylinderabschnitt geht mit seiner der Deckfläche gegenüberliegenden Grundfläche in den Hohlzylinder bzw. in den hohlzylindrischen Teil z.B. der ersten Strömungsmittelleitung über. Der Zylinderabschnitt wird bereitgestellt, indem man die hohlzylindrische Strömungsmittelleitung mit einer Ebene, die nicht parallel und nicht im rechten Winkel zu ihrer Mitte-Längsachse A ist, schneiden kann, hierbei ist die Deckfläche als Schnittfigur elliptisch; ebenso kann auch die dem Hohlzylinder abgewandte Öffnung des Zylinderabschnitts elliptisch ausgebildet sein.

Die Deckfläche und die Grundfläche des Zylinderabschnitts bzw. deren Ebenen schließen einen Neigungswinkel α ein, der vorzugsweise 0 bis 11,25°, noch mehr bevorzugt 11,25°, betragen kann. Der Neigungswinkel α kann auch je nach Erfordernis mehr als 11,25° betragen, was unter anderem von dem Ausmaß der der zweiten Strömungsmittelleitung zugewandten lichten Weite des Mantels abhängig ist. Die in der senkrechten Draufsicht -koaxial mit der Mitte-Längsachse A aus gesehen- kreisförmige Grundfläche des Zylinderabschnitts hat einen Radius r7, der gleich groß ist wie der Radius r8 der in der senkrechten Draufsicht kreisförmigen Deckfläche des Zylinderabschnitts. r7 und r8 können übereinstimmen.

Die Schnittebene der hohlzylinderförmigen Strömungsmittelleitung, quer zu der Mitte-Längsachse A der Rohrleitung, schließt mit der Deckfläche des Zylinderabschnitts einen Neigungswinkel α ebenfalls von vorzugsweise 0 bis 11,25 °, noch mehr bevorzugt 11,25°, ein Die Schnittebene kann mit der Grundfläche des Zylinderabschnitts übereinstimmen.

Unter Deckflache wird im Sinne der Erfindung eine Schnittebene der hohlzylinderförmigen Strömungsmittelleitung auch verstanden, die schräg oder schief zu der Mitte-Längsachse A der ersten hohlzylinderförmigen Strömungsmittelleitung bzw. zu der Mitte-Langsachse A des an den Zylinderabschnitt sich anschließenden Hohlzylinders ausgebildet oder abgeschnitten ist, und von dem Ende des Hohlzylinders abgewandt ist; unter Grundfläche wird im Sinne der Erfindung eine Schnittebene der hohlzylinderförmigen Strömungsmittelleitung auch verstanden, die im Längsschnitt quer zu der Mitte-Längsachse B der hohlzylinderförmigen Strömungsmittelleitung bzw. zu der Mitte-Längsachse A des an den Zylinderabschnitt sich anschließenden Hohlzylinders ausgebildet oder abgeschnitten ist. Im Längsschnitt kann bei der schief abgeschnittenen hohlzylinderförmigen Strömungsmittelleitung die an der Außenseite der ersten Strömungsmitteilleitung parallel zu der Mitte-Längsachse A anliegende Seitenlinie h1 länger als die der Seitenlinie h1 gegenüberliegende Seitenlinie h2 sein.

Der Zylinderabschnitt geht mit seinem Bereich, der der Einfachheit und Klarheit wegen Deckfläche genannt wird, in einen Mantel als Muffe über, die im Längsschnitt nach außen gewölbt ist. Der Mantel nimmt das eine Kopfende der zweiten Strömungsmittelleitung auf Die Innenfläche des Mantels ist als gleichförmiger Kugelscheibentyp oder gleichförmiger Kugelzonentyp ausgebildet. Unter Kugelscheibe oder Kugelschicht oder Kugelzone des gleichförmigen Typs wird im Sinne der Erfindung auch der Teil z.B. einer Hohlkugel verstanden, der mit dem mittels von zwei Parallelschnitten unter Bildung von Ebenen aus der Hohlkugel ausgeschnittenen Mantelstück oder Mantel als Kugelzone übereinstimmt. Die Parallelschnitte werden als eine und andere Schnittebenen bezeichnet. Die Innenfläche des Mantels kann daher dem Abdruck, quasi der Negativform, der äußeren Form des mittels von zwei Parallelschnitten unter Bildung von Ebenen aus der Kugel ausgeschnittenen Mantelstücks bzw. die Innenfläche des Mantels kann der inneren Form des mittels von zwei Parallelschnitten unter Bildung von Ebenen aus der Hohlkugel ausgeschnittenen Mantelstücks entsprechen; hierbei können die Kugelmittelpunkte der inneren Form und der äußeren Form der Hohlkugel identisch sein. Jedoch ist vorzugsweise die Außenfläche des Mantels nicht wesentlich.

Der kugelscheibenartige oder kugelzonenartige Mantel bzw. die kugelscheibenartige Innenfläche des Mantels ist gleichförmig, da die eine Schnittebene und die andere Schnittebene des aus der z.B. Hohlkugel ausgeschnittenen Mantelstücks parallel zueinander ausgerichtet sein können.

Der Mantel geht im Bereich seiner einen Schnittebene in den Zylinderabschnitt über. Der Parallelschnitt als die eine Schnittebene, über den der Mantel bzw. das Mantelstück mit dem Zylinderabschnitt der ersten Strömungsmittelleitung verbunden ist, hat z.B. einen Radius r3. Der Bereich des Mantels, der dem Zylinderabschnitt abgewandt ist und als andere Schnittebene bezeichnet ist, hat z.B. einen Radius r4, der größer als der Radius r3 der einen Schnittebene sein kann. In einer weiteren Ausgestaltung kann der Mantel auch ein ungleichförmiger Kugelscheibentyp sein, wobei die Schnittebenen der hohlen Kugelscheibe nicht parallel zueinander, also nicht planparallel, ausgerichtet sind, sondern sich unter Bildung eines Neigungswinkel φ in einem Schnittpunkt treffen können.

Der Mantel nimmt das eine Kopfende der zweiten Strömungsmittelleitung derart auf, dass die zweite Strömungsmittelleitung mit der Außenfläche ihres Kopfendes an der Innenfläche des Mantels beweglich und vorzugsweise dicht anliegt. Die zweite Stromungsmittelleitung ist an ihrem Kopfende mit einem balligen Kopfstück versehen, welches im Längsschnitt nach außen gewölbt oder nach außen gerundet ausgebildet ist. Der Innenraum des Kopfendes ist vorzugsweise zylinderförmig ausgebildet. Der Innenraum kann von den Ringflächen und gegebenenfalls von der Innenfläche des Ansatzes zwischen den Ringflächen seitlich begrenzt sein. Der Innenraum hat Innenflächen, die axiale Ringflächen sein können. Die dem Mantel abgewandte erste Ringfläche hat vorzugsweise einen größeren Durchmesser X als die dem Mantel zugewandte zweite Ringfläche mit dem Durchmesser Y. Die Ringflächen folgen aufeinander, wobei der Übergang zwischen der ersten zu der zweiten Ringfläche über einen fasenartigen Ansatz, der mit der Mitte-Längsachse B einen Winkel von 15 bis 85° einschließen kann, ermöglicht werden kann. Ebenso ist es möglich, dass ohne Ansatz, ohne Erhebungen oder Ausnehmungen, z.B. fluchtend und bündig, die zweite Ringfläche in die erste übergeht oder die zweite als eine kreiskegelige ausgebildet ist

Vorzugsweise kann der zwischen den Ringflächen abgeschrägte, die beiden Ringflächen verbindende Ansatz so gestaltet sein, dass der von der ersten Ringfläche und dem Ansatz ausgebildete Innenraum die zweite Strömungsmittelleitung aufnimmt sowie die zweite Strömungsmittelleitung mit ihrem einen Ende oder Kopfende, welches gleichfalls auch zur Erleichterung der Einführung derselben in den von der ersten Ringfläche ausgebildeten Innenraum abgeschrägt sein kann, in den von den Ringflächen ausgebildeten Innenraum eingeführt werden kann; die Strömungsmittelleitung kann mit ihren Außenseiten Fläche an Fläche an der ersten Ringfläche und an der Innenfläche des Ansatzes als Fase anliegen, ebenso kann auch die Innenseite der zweiten Strömungsmittelleitung fluchtend und bündig zur Bereitstellung eines strömungsmittelgünstigen Gerinnes mit der zweiten Ringfläche ohne Auftreten wesentlicher Kanten und Ecken ausgerichtet sein und kann ohne nennenswerte strömungsstörende und zu Undichtigkeiten führende Spaltenbildung in diese übergehen. Als zweite Strömungsmittelleitungen können solche mit oder ohne rippenförmigen Erhebungen auf ihrer Außenseite verwendet werden. Hinzutretend kann auch die von der ersten Ringfläche aufgenommene Strömungsmittelleitung stumpf mit ihrem Kopfende an einem der ersten Strömungsmittelleitung zugewandten Rand der zweiten anstoßen, so dass auch hier die Innenseite der zweiten Strömungsmittelleitung fluchtend und bündig zur Bereitstellung eines strömungsmittelgünstigen Gerinnes mit der zweiten Ringfläche ohne Auftreten wesentlicher Kanten und Ecken ausgerichtet sein und in diese übergehen kann. Als erste und zweite Strömungsmittelleitungen können solche mit oder ohne rippenförmigen Erhebungen auf ihrer Außenseite verwendet werden.

Der von der ersten Ringfläche gebildete Innenraum hat eine Mitte-Längsachse B. Der von der zweiten Ringfläche ausgebildete Innenraum hat eine Mitte-Längsachse B. Vorzugsweise fallen beide Mitte-Längsachsen B zusammen. Die Mitte-Längsachsen B der Innenräume der Ringflächen und die Mitte-Längsachse B der zweiten Strömungsmittelleitung können gleichfalls zusammenfallen. Die zweite Ringfläche ist als eine des schräg abgeschnittenen Typs ausgebildet.

Unter schräg abgeschnittener Ringfläche wird im Sinne der Erfindung auch eine solche hohlzylinderförmige Ausgestaltung der zweiten Strömungsmittelleitung als zweite Ringfläche verstanden, wobei das Kopfende der zweiten zylindrischen Ringfläche, als Deckfläche bezeichnet, abgeschrägt oder schief abgeschnitten ist und nicht quer zu der Mitte-Längsachse des Hohlzylinders angeordnet ist. Die Ringfläche geht mit ihrer der Deckfläche gegenüberliegenden Grundfläche in den Ansatz oder in die erste Ringfläche über. Der Einfachheit und Klarheit wegen wird der Bereich der zweiten Ringfläche, mit welchem die zweite in die erste Ringfläche übergeht oder sich in den Ansatz erstreckt, auch Grundfläche genannt; der Einfachheit und Klarheit wegen wird der Bereich der zweiten Ringfläche, der der ersten Strömungsmittelleitung zugewandt ist, auch Deckfläche genannt.

Die Grundfläche und die Deckfläche der zweiten Ringfläche schließen z.B. einen Neigungswinkel χ von 0 bis 11,25° , vorzugsweise 11,25, ein. Der Innenraum der zweiten Ringfläche entspricht einem schief abgeschnittenen Kreiszylinder. Der Innenraum der ersten Ringfläche kann einem geraden Kreiszylinder oder sonstigen den Erfordernissen oder Wünschen des Benutzers Formen entsprechen.

Das Kopfende der zweiten Strömungsmittelleitung wird außenseitig am ihrem Kopfende von dem balligen Kopfstück gebildet. Das Kopfstück ist z.B. im Längsschnitt nach außen gewölbt, konvex ausgebildet. Das ballige Kopfstück ist von kugelscheibenartiger Ausbildung des ungleichartigen Typs.

Unter kugelscheibenartig ausgebildetes Kopfstück des ungleichförmigen Typs wird im Sinne der Erfindung auch verstanden, dass das ballige Kopfstück mit seiner Außenfläche einer Kugelzone entspricht, die als Teil einer Kugel durch zwei nicht parallel zueinander ausgerichtete Schnittebenen ausgeschnitten ist. Der herausgeschnittene Teil wird auch Kugelabschnitt oder Kugelschicht genannt. Das ballige Kopfstück mit seiner Außenflache wird von der Mantelfläche der Kugelschicht ausgebildet. Der durch die zwei nicht zueinander parallele Schnittebenen ausgebildete Teil der Kugel umfaßt die der ersten Strömungsmittelleitung zugewandte erste Schnittebene und die der ersten Strömungsmittelleitung abgewandte zweite Schnittebene. Die zweite Schnittebene hat z.B. einen Radius r1, der größer als der Radius r2 der ersten Schnittebene sein kann. Der Bereich des Kopfstücks, der der zweiten Strömungsmittelleitung zugewandt ist, wird der Einfachheit und Klarheit halber auch zweite Schnittebene und derjenige Bereich, der zweiten Strömungsmittelleitung abgewandt ist, wird auch erste Schnittebene genannt.

Die beiden Ringflächen mit übereinstimmender Mitte-Längsachse B sind in dem balligen Kopfstück der zweiten Strömungsmittelleitung derart ausgerichtet, dass die Mitte-Längsachse B der von den Ringflächen gebildeten Innenräume den Kreismittelpunkt M der ersten Schnittebene schneidet.

Das kugelscheibenartige Kopfstück ist ungleichförmig, da die zweite Schnittebene mit der ersten Schnittebene des kugelscheibenartigen Kopfstücks einen Neigungswinkel β von z.B. 0 bis 11,25 °, vorzugsweise 11,25°, einschließt.

Vorzugsweise stimmt der Neigungswinkel *β* mit den Neigungswinkeln α und/oder χ uberein

Das ballige Kopfstück kann außenseitig rillenartige, vorzugsweise in Umfangsrichtung, umlaufende oder teilweise umlaufende Ausnehmungen aufweisen. Die Ausnehmungen verringern das Ausmaß der Außenfläche des Kopfstücks, welche an der gleichförmig kugelscheibenartigen Innenfläche des Mantels sich bewegt, um die Reibungskraft zu verringern, ohne dass nennenswerte Undichtigkeiten auftreten. Eine der in Umfangsrichtung umlaufenden Rillen ist als Nut ausgebildet, die einen Dichtungsring aufnehmen kann. Der Dichtungsring liegt dichtend an der Innenseite des Mantels an. Da die Dichtigkeit gegen Leckverluste des Strömungsmittels zwischen zwei Berührungsflächen von der Berührungskraft abhängt, die als diejenige Kraft definiert sein kann, welche diese Flächen zusammendrückt, dividiert durch die Berührungsfläche, bedeutet dieses, dass eine Erhöhung der Berührungskraft geringere Leckverluste gewährleistet, so dass der Krümmungsradius der gewölbten Fläche des Dichtungsrings an der Innenfläche des Mantels kleiner wird, die Berührungsfläche sich folglich verringert und dadurch die Berührungskraft des Dichtungsrings, die gegen die Innenfläche des Mantels wirkt, sich vorteilhafterweise erhöht.

Die Außenfläche des balligen Kopfstücks steht zwar mit der Innenfläche des Mantels in Berührung, jedoch wird durch die Anordnung von mindestens einem Dichtungsring in einer Nut, umlaufend in Umfangsrichtung, eine hinreichende und dauerhafte Abdichtung von dem Innenraum der Rohrleitung nach außen und von außen nach innen gewährleistet, wobei der Kreismittelpunkt des Dichtrings mit dem Kugelmittelpunkt K zusammenfällt Es zeigt sich, dass die Dichtungsringe von außen keinen mechanischen Eingriffen zugänglich sind, so dass Undichtigkeiten bereits durch oberflächliche Beschädigungen der Dichtungsringe nicht aufzutreten vermögen.

Es zeigt sich, dass die erfindungsgemäße Rohrkupplung stufenlos auf unterschiedliche Winkellagen der zu verbindenden Strömungsmittelleitungen eingestellt werden kann. Die Beweglichkeit und das Ausmaß der Beweglichkeit der zweiten Strömungsmittelleitung mit dem Kopfstück in der Muffe bzw. in dem Mantel der ersten Strömungsmittelleitung sind auch abhängig von dem Ausmaß des Abstands der Schnittebenen des Mantels zueinander, von dem Durchmesser der anderen Schnittebene des Mantels, die der zweiten Strömungsmittelleitung abgewandt ist. Ebenso kann das Ausmaß der Beweglichkeit der zweiten Strömungsmittelleitung in dem Mantel als Muffe von dem Außendurchmesser der zweiten Strömungsmittelleitung abhängig sein.

Es zeigt sich, dass durch die erfindungsgemäße Rohrkupplung und durch die Ausbildung einer abgeschrägten Kante der zweiten Ringfläche, die der ersten Strömungsmittelleitung zugewandt ist, ein strömungsmittelgünstiges Gerinne für Strömungsmittel bereitgestellt wird, so dass Ablagerungen von Schmutzteilchen, die in Strömungsmitteln, wie Abwässer oder dergleichen zu finden sind, sich nicht niederschlagen oder nicht abgefangen werden können, so dass auch eine Verstopfung der erfindungsgemäßen Rohrkupplung im Gegensatz zum Stand der Technik in hinreichender Weise auch bei dauernden Gebrauchs beseitigt ist

Die Winkellagen können auch größer als 22,5 ° sein, wenn zumindest die Summe der Winkel α und χ gleich dem Winkel γ ist und der Winkel α gleich dem Winkel χ ist, also die Summe größer als 22,5 ° ist; die Winkellage ist abhängig von dem Ausmaß der der zweiten Strömungsmittelleitung zugewandten Öffnung des Mantels bzw. dem Ausmaß der lichten Weite derselben des Mantels. Es zeigt sich, dass der Kreismittelpunkt zumindest eines Dichtungsrings mit dem Kugelmittelpunkt K vorteilhafterweise zusammenfällt.

Die erste Strömungsmittelleitung kann außenseitig in Umfangsrichtung umlaufende oder teilweise umlaufende Rippen oder rippenartige Erhebungen aufweisen, die beispielsweise parallel zueinander und im Längsschnitt quer zu der Mitte-Längsachse ausgerichtet sind, haben.

Vorzugsweise kann die erste Strömungsmittelleitung mit dem Mantel werkstoffeinstückig bzw einstückig aus kunststoffartigem und / oder metallenem Material hergestellt sein; zudem kann die zweite Strömungsmittelleitung mit dem Kopfstück einstückig oder werkstoffeinstückig aus kunststoffartigem und / oder metallenem Material oder dergleichen hergestellt sein. Das kunststoffartige Material kann z.B. Polyethylen, Polypropylen, Polyvinylchlorid oder dergleichen und / oder Mischungen derselben sein.

Die erfindungsgemäße Rohrkupplung kann zur Verbindung von Rohren jeglicher Art, Zusammensetzung und unabhängig von deren Verwendung benutzt werden.

Die erfindungsgemäße Schachtbodenanordnung weist ein aufrechtstehendes Schachtrohr auf, an welchem im unteren Bereich des Schachtrohrs mindestens ein Rohr angeformt ist, welches mit dem Innenraum des Schachtrohrs flüssigkeitsmäßig in Verbindung steht. An dem Rohr sind eine oder mehrere erfindungsgemäße Rohrkupplungen gekoppelt. Im oberen Bereich des Schachtrohrs kann sich eine Teleskopabdeckung anschließen.

Ebenso kann in einem weiteren Ausführungsbeispiel das dem Schachtrohr der erfindungsgemäßen Schachtbodenanordnung abgewandte Ende des Rohrs ein Ende des schräg abgeschnittenen Typs sein und einen Zylinderabschnitt mit einem Neigungswinkel α aufweisen. An das obere Ende des Zylinderabschnitts kann sich ein Mantel des gleichförmigen Kugelscheibentyps als Muffe zur Aufnahme des balligen Kopfstücks einer zweiten Rohrleitung anschließen, welches in dem Mantel beweglich gelagert ist. Weiterhin kann in einer Ausgestaltung des balligen Kopfstücks dieses an eine zweite Muffe angeformt. Als Schachtboden eignen sich Uponal-Schachtböden der Fa. Uponor Anger GmbH. Die weiteren Ausgestaltungen der Muffe und die des Kopfstücks der erfindungsgemäßen Schachtbodenanordnung können mit den Ausgestaltungen der Muffe und den Ausgestaltungen des Kopfstücks der erfindungsgemäßen Rohrkupplung, wie oben und unten ausgeführt, übereinstimmen.

Die erfindungsgemäße Rohrkupplung des kugelmuffenartigen Typs kann im Abwassersektor verwendet werden, welche einen inneren Kugelabschnitt mit einer exzentrischen Bohrung zur Aufnahme der zweiten Strömungsmittelleitung, z.B. solcher des Rohr-Typs ultra rib 1 oder ultra rib 2 oder KG der Fa. Uponor Anger GmbH bzw. Uponor (Deutschland) GmbH aufweisen kann. Das Kopfende ist in der kugelförmigen Muffe der ersten Strömungsmittelleitung drehbar gelagert, wobei das Strömungsmittelrohr bzw. -leitung der Muffe hinzutretend exzentrisch zur Muffe angeordnet sein kann. Stufenlose Einstellungen von Winkeln von 0 bis 22,5° sind nach Richtung und Gefälle möglich ohne Auftreten von Durchflussverringerungen oder Stufenbildung im Innern, so dass Einstellwinkel von - 90° bis + 90° bereitgestellt werden können. unter Verwendung von z.B Schachtrohren, wie Mannloch-Einbauteilen der Fa. Uponor Anger GmbH oder Fa. Uponor (Deutschland) GmbH, mit angeformten Richtungsänderungen im Gerinne, rechts- und / oder linksseitig, beispielsweise durch angeformte Zwillings- oder Drillingsrohre.

### Ausführungsbeispiele

Die Zeichnungen zeigen aufgrund schematischer Vereinfachung, ohne Anspruch auf eine maßstabsgetreue Wiedergäbe der Erfindung, in
**Fig. 1** den Längsschnitt durch die erfindungsgemäße Rohrkupplung,
**Fig. 2** den Längsschnitt durch das Kopfende der zweiten Strömungsmittelleitung der erfindungsgemäßen Rohrkupplung,
**Fig. 3** den Längsschnitt durch das eine Ende mit Mantel der ersten Strömungsmittelleitung der erfindungsgemäßen Rohrkupplung,

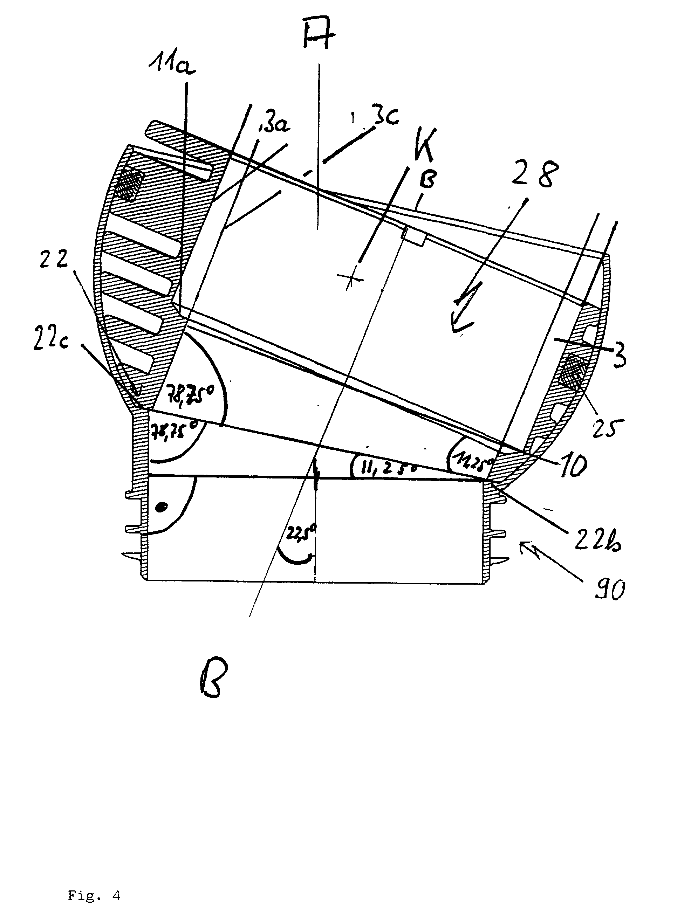

**Fig. 4** den Längsschnitt durch die erfindungsgemäße Rohrkupplung mit einer Abwinklung mit dem Winkel λ gleich 22,5°,
**Fig. 5** den Längsschnitt durch die erfindungsgemäße Rohrkupplung mit einer Abwinklung mit dem Winkel λ gleich 0°,
**Fig. 6** den Längsschnitt durch die erfindungsgemäße Rohrkupplung mit einer Abwinklung mit dem Winkel λ gleich 22,5° und Hilfsmittelachse H sowie
**Fig. 7** Draufsicht auf die an Schachtverteilerrohren eines Schachtbodens gekoppelten erfindungsgemäßen Rohrkupplungen.

Die erfindungsgemäße Rohrkupplung hat eine erste Rohrleitung 1, die an ihrem einen Ende schräg abgeschnitten ist, so dass die Wand der ersten Rohrleitung 1 eine Deckfläche 6 ausbildet, deren Ebene oder Fläche einen Winkel ε mit der Mitte-Längsachse A der ersten Rohrleitung 1 von weniger als 90 ° einschließt. Die erste Rohrleitung 1 hat an ihrem einen Ende einen Zylinderabschnitt 4, dessen Deckfläche 6 mit der Grundfläche 5 des Zylinderabschnitts 4 einen Winkel α von 11,25° einschließt. Der Zylinderabschnitt 4 entspricht demjenigen Teil der ersten Rohrleitung 1, der durch zwei Ebenen, hier Deckfläche 6 und Grundfläche 5, die nicht zueinander planparallel sind, aus der Rohrleitung 1 herausgeschneidbar ist. Der Zylinderabschnitt 4 geht im Bereich seiner Deckfläche 6 in einen Mantel 7 und im Bereich seiner Grundfläche 5 in den geraden hohlzylinderförmigern Teil der ersten Rohrleitung 1 über. Der Bereich des Zylinderabschnitts 4, der in den Mantel 7 übergeht, wird der Einfachheit und Klarheit wegen auch Deckfläche 6 genannt Der Bereich des Zylinderabschnitts 4, der in den Teil der ersten Rohrleitung 1 des geraden hohlzylindrischen Typs übergeht, wird der Einfachheit und Klarheit wegen auch Grundfläche 5 genannt

Der Mantel 7 ist innenseitig von gleichförmig kugelscheibenartiger Gestalt. Unter Kugelscheibe ist derjenige Teil zu verstehen, der durch zwei, in Ausgestaltung des gleichformigen Typs zueinander parallele, Schnittebenen 40, 41 aus einer Hohlkugel ausschneidbar bzw. ausgebildet ist. Die Innenfläche 80 des Mantels 7 kann auch dem Abdruck der äußeren Form der Kugelzone entsprechen. Auch die Außenseite des Mantels 7 kann der äußeren Form der Kugelzone entsprechen. Der Mantel 7 kann innenseitig in einem weiteren Ausführungsbeispiel von ungleichförmig kugelscheibenartiger Gestalt (nicht gezeigt) sein.

Die Innenfläche 80 wird im Bereich, der der zweiten Rohrleitung 3 zugewandt ist, von der anderen Schnittebene 40 begrenzt und dieser Bereich wird der Klarheit wegen auch als andere Schnittebene 40 bezeichnet. Die Innenfläche 80 wird im Bereich, der der zweiten Rohrleitung 3 abgewandt ist, von der einen Schnittebene 41, begrenzt und dieser Bereich der Klarheit wegen als die eine Schnittebene 41 bezeichnet. Die der zweiten Rohrleitung 3 zugewandte Öffnung der anderen Schnittebene 40 hat einen Radius r4, der größer als der Radius r3 des Bereichs der einen Schnittebene 41 ist, welcher in den Zylinderabschnitt 4 übergeht. Aufgrund der planparallelen Ausrichtung der beiden Schnittebenen 40, 41 zueinander ist die kugelscheibenartige Innenfläche 80 des Mantels 7 von gleichförmiger Gestalt. Nicht gezeigt ist eine nicht planparallele Ausrichtung der beiden Schnittebenen 40, 41 zueinander der kugelscheibenartigen Gestalt des Mantels 7 des ungleichförmigen Typs.

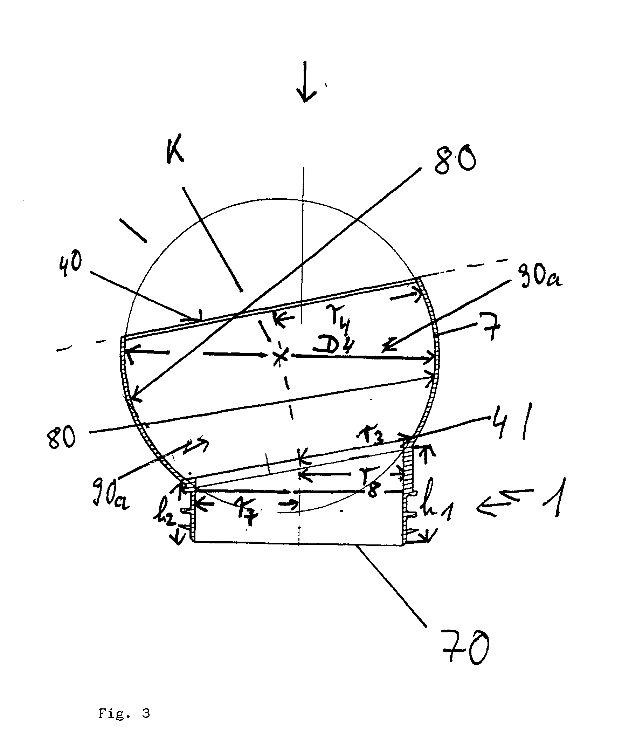

Die lichte Weite und die Form des Bereichs der der zweiten Rohrleitung 3 zugewandten Öffnung des Zylinderabschnitts 4, die im wesentlichen der Deckfläche 6 des Zylinderabschnitts 4 entspricht, kann mit der lichten Weite und Form des Bereichs der der ersten Rohrleitung 1 zugewandten Öffnung der zweiten Ringfläche 10, die im wesentlichen der Deckfläche 15 der zweiten Ringfläche 10 entspricht, übereinstimmen. Der Radius r5 des in der senkrechten Draufsicht (siehe Pfeil Fig. 3) koaxial mit der Mitte-Längsachse A kreisförmigen Zylinderabschnitts 4 ist mit dem Radius r6 der in der Draufsicht kreisförmigen zweiten Ringfläche 10 übereinstimmend.

Die Mitte-Längsachsen B der Ringflächen 9, 10 stimmen mit der Mitte-Längsachse B der zweiten Strömungsmittelleitung 3 über.

Der Zylinderabschnitt 4 wird bereitgestellt, indem man die erste Rohrleitung 1 mit einer Ebene, die nicht parallel zu ihrer Mitte-Längsachse A ist, schneidet, hierbei ist die Deckfläche 6 als Schnittfigur elliptisch; ebenso ist auch die der ersten Rohrleitung 1 abgewandte Öffnung des Zylinderabschnitts 4 als Schnittfigur elliptisch ausgebildet. Als Schnittfigur bedeutet auch im Sinne der Erfindung nicht in senkrechter Draufsicht und nicht koaxial mit der Mitte-Längsachse A aus gesehen, sondern Sicht längs einer Geraden, die senkrecht auf der Schnittebene bzw. Schnittfigur stehen kann. Die in der senkrechten Draufsicht -koaxial mit der Mitte-Längsachse A - kreisförmige Grundfläche 5 des Zylinderabschnitts 4 hat einen Radius r7, der gleich groß ist wie der Radius r8 der in der senkrechten Draufsicht kreisförmigen Deckfläche 6 des Zylinderabschnitts 4. Auch die Deckfläche 15 der zweiten Ringfläche 10 und die der ersten Rohrleitung 1 zugewandte Öffnung der zweiten Ringfläche 10 sind als Schnittfigur elliptisch ausgebildet. Als Schnittfigur bedeutet auch im Sinne der Erfindung nicht in senkrechter Draufsicht und nicht koaxial mit der Mitte-Längsachse B aus gesehen, sondern Sicht längs einer Geraden, die senkrecht auf der Schnittebene bzw. Schnittfigur stehen kann.

Die zweite Rohrleitung 3 ist an ihrem Kopfende, welches der ersten Rohrleitung 1 zugewandt ist, mit einem balligen Kopfstück 8 ausgebildet. Die Außenfläche 17 des balligen Kopfstücks 8 ist von kugelscheibenartiger Gestalt. Die kugelscheibenartige oder kugelzonenartige Ausbildung der Außenfläche 17 des Kopfstücks 8 ist jedoch ungleichförmig.

Unter kugelscheibenartiger oder kugelzonenartiger Gestalt ist derjenige Teil einer Kugel zu verstehen, der durch zwei Schnittebenen, hier als erste 21 und zweite Schnittebene 20 bezeichnet, gebildet wird. Die Außenfläche 17 des Kopfstücks 8 ist im Längsschnitt nach außen gewölbt. Die Außenfläche 17 ist der Ausbildung der Innenfläche 80 des Mantels 7 angepaßt und liegt an dieser beweglich oder gleitend im wesentlichen Fläche an Fläche an und ist in dem von der Innenfläche 80 des Mantels 7 ausgebildeten Innenraum 90a nach allen Richtungen mit Maßgabe der Ausgestaltung der Innenfläche 80 des Mantels 7 schwenkbar; ein Flächenanliegen erfolgt im wesentlichen, da eine geringe, wenn auch nicht nennenswerte Beabstandung der Flächen durch einen Dichtungsring 25 möglich sein kann.

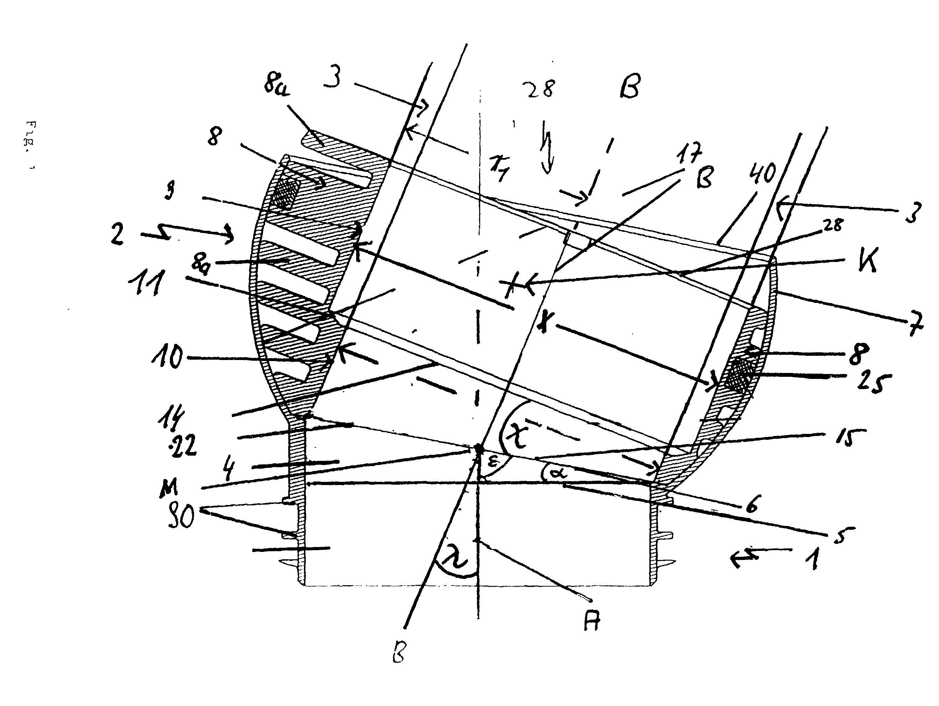

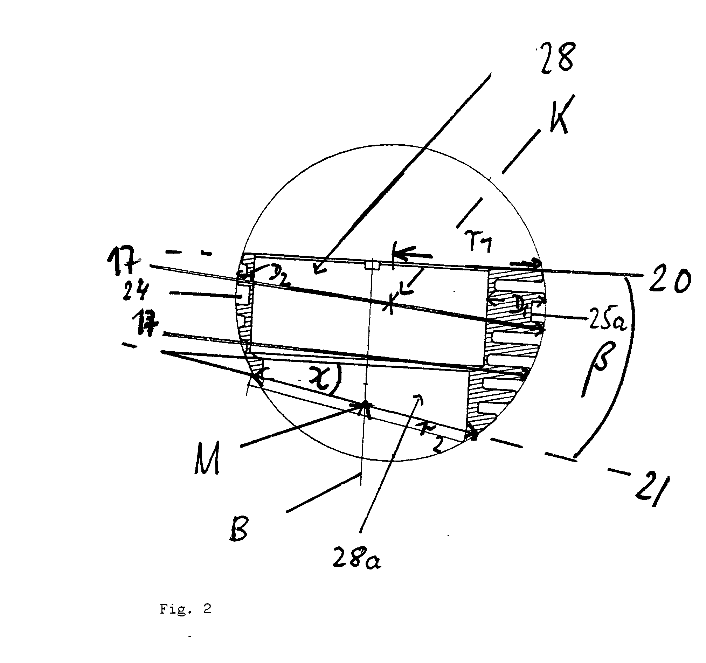

Das Kopfstück 8 mit seiner Außenfläche 17 ist derart ausgebildet, dass die Außenflache 17 einer Kugelzone des aus der Kugel herausgeschnittenen Stücks entspricht. Der Bereich des Kopfstücks 8, der der ersten Rohrleitung 1 zugewandt ist, wird der Klarheit und Einfachheit wegen als erste Schnittebene 21 bezeichnet; der Bereich des Kopfstücks 8, der der ersten Rohrleitung 1 abgewandt ist, wird der Klarheit und Einfachheit wegen als zweite Schnittebene 20 bezeichnet. Die erste Schnittebene 21 hat einen Radius r2, der im Vergleich zu dem Radius r1 der zweiten Schnittebene 20 kleiner ist. Das bedeutet, dass, wie in Fig. 1 und 2 gezeigt, im Längsschnitt das Kopfstück 8 in Richtung der ersten Rohrleitung 1 sich verjüngt. Die erste 21 und die zweite Schnittebene 20 schließen einen Neigungswinkel *β* von 11,25 ° ein.

Die Innenfläche des Kopfstücks 8 sind die Ringflächen 9, 10. Der zylinderförmige Innenraum 28 des Kopfstücks 8 wird von der ersten 9 und der zylinderförmige Innenraum 28a wird der zweiten Ringfläche 10 gebildet.

Das Kopfstück ist mit seiner Mitte-Längsachse B in dem Mantel 2 so angeordnet ist, dass die Mitte-Längsachse B die Mitte-Längsachse A der ersten Rohrleitung 1 unter Bildung des Winkels λ schneidet und die Summe aus den Neigungswinkeln α = 11,25 ° und χ=11,25 ° dem Betrag des Winkels λ = 22,5 ° entspricht.

Ebenso kann statt der Winkellage von 22,5 ° auch eine solche von mehr als 22,5 ° eingestellt werden, wenn die Summe aus den gleichen Neigungswinkeln α und χ größer als 11,25 ° ist und der Mantel 7 über eine derart große Öffnung verfügt, dass die Beweglichkeit der zweiten Rohrleitung 3 nicht in dem Mantel 7 eingeschränkt wird (nicht gezeigt); z.B. kann auch der der Öffnung zugewandte Rand zw. anderen Schnittebene 40 des Mantels 7 nach außen hinaus oder umkragend ausgebildet sein.

Die Außenfläche 17 des Kopfstücks 8 ist in dem von der Innenfläche 80 des Mantels 2 ausgebildeten Innenraum 90a so beweglich angeordnet, dass die Mittelpunkte der Kugeln als Kugelmittelpunkt K, aus welchen die kugelscheibenförmige Innenfläche 80 des gleichförmigen Typs des Mantels 2 und aus welchen die kugelscheibenförmige Außenfläche 17 des ungleichförmigen Typs des Kopfstücks 8 herausgeschnitten sind, in einem gemeinsamen Kugelmittelpunkt K zusammenfallen bzw. mit diesem übereinstimmen. Die Außenfläche 17 des Kopfstücks 8 ist in dem von der Innenfläche 80 des Mantels 2 ausgebildeten Innenraum 90a derart beweglich angeordnet, dass die Mitte-Längsachse B nicht den Kugelmittelpunkt K schneidet, sondern die Mitte-Längsachse B ist von dem Kugelmittelpunkt K beabstandet bei der Schwenkung der Rohrleitungen 1, 3.

Die Schwenkung der Rohrleitungen 1, 3 erfolgt exzentrisch; die zweite Rohrleitung 3 kann in der ersten Rohrleitung 1 derart gedreht oder geschwenkt werden, dass ihre Mitte-Längsachsen A und B um die Hilfsmittelachse H unabhängig voneinander ausgerichtet und die Mitte-Längsachsen A und B auf einer den Mitte-Längsachsen A und B gemeinsamen Kreisbahn angeordnet sein können, wobei die Mitte-Längsachsen A und B den gemeinsamen Schnittpunkt S haben, der mit dem Mittelpunkt M der der ersten Rohrleitung 1 zugewandten ersten Schnittebene 21 der Außenfläche 17 des Kopfstücks 8 zusammenfallt und / oder der mit dem Mittelpunkt M der Deckfläche 6 des Zylinderabschnitts 4 der ersten Rohrleitung 1 zusammenfällt.

Unter Hilfsmittelachse H wird im Sinne der Erfindung auch eine Gerade verstanden, die die Mittelpunkte K der Kugeln, aus welcher der kugelscheibenförmige Mantel 7 bzw. seine kugelscheibenförmige Innenfläche 80, vorzugsweise des gleichförmigen Typs, und aus welcher das kugelscheibenförmige Kopfstück 8 bzw. seine kugelscheibenförmige Außenfläche 17 des ungleichförmigen Typs herausgeschnitten sind, und den Mittelpunkt M der der ersten Rohrleitung 1 zugewandten ersten Schnittebene 21 der Außenfläche 17 und / oder den Mittelpunkt M der Deckfläche 6 des Zylinderabschnitts 4 der ersten Rohrleitung 1 schneidet. nittebene der Außenfläche schneidet. Die Hilfsmittelachse H ist senkrecht zu der Grundfläche 5 des Zylinderabschnitts 4 ausgerichtet.

Ebenso ist es möglich, dass die erste 21 und die zweite Schnittebene 20 des Kopfstücks 8 parallel zueinander zur Bereitstellung des gleichförmigen kugelscheiben- oder kugelzonenartigen Außenfläche 17 des Kopfstücks 8 ausgerichtet sind (nicht gezeigt).

Die zweite Rohrleitung 3 hat einen zylinderförmigen Innenraum. Der von der ersten Ringfläche 9 gebildete Innenraum 28 hat einen größeren Durchmesser X als der von der zweiten Ringfläche 10 gebildete 28a, wobei die zweite 10 sich an die erste 9 anschließt. Die zweite Ringfläche 10 ist der ersten Rohrleitung 1 zugewandt, die zweite Ringfläche 10 der ersten Rohrleitung 1 abgewandt. Die Ringflächen 9, 10 verlaufen in Richtung der Mitte-Längsachse B, da der von den Ringflächen 9, 10 ausgebildete Innenraum 28, 28a aufgrund seiner zylindrischen Form sich längs der Mitte-Längsachse B erstreckt. Zwischen der ersten 9 und der zweiten Ringfläche 10 befindet sich ein Ansatz 11, der sich im Längsschnitt in Richtung zweiter Ringfläche 10 unter Bildung einer Fase 11a verjüngt. Die in den Innenraum 28 einführbare zweite Rohrleitung 3 weist an ihrem Kopfende ebenso eine an die Fase 11a angepaßte Abschrägung auf, so dass die Fase 11a des Ansatzes 11 mit der Abschrägung und die erste Ringfläche 9 mit der Außenseite 3a der zweiten Rohrleitung 3 Fläche an Fläche zum Anliegen gelangen. Zudem zeigt sich, dass die Innenseite 3c der von dem Innenraum 28 der ersten Ringfläche 9 aufgenommenen zweiten Rohrleitung 3 mit der Innenseite der zweiten Ringfläche 10 im wesentlichen eben und fluchtend ohne Auftreten von nennenswerten Spalten, Ausnehmungen oder Erhebungen ein möglichst strömungsgünstiges Gerinne für das zu bewegende Strömungsmittel zu gewährleisten, so dass auch sogenannte Toträume, in denen sich die Schwebstoffe aus den Abwässern infolge von in den Strömungsmittelfluß reichende Erhebungen abzulagern vermögen, in hinreichender Weise vermieden werden, so dass eine widerstandsarme strömungsmittelgünstige Verbindung bereitgestellt wird

Die der ersten Rohrleitung 1 zugewandte Kante 22 des Kopfstücks 8 ist als Fase 22c in Umlaufrichtung abgeschrägt und der Zylinderabschnitt 4 weist einen der zweiten Rohrleitung 3 zugewandten, oberen Rand 22a als Fase 22b auf, deren Ebene mit der Deckfläche 6 übereinstimmt. Die Ebene der Fase 22c entspricht der ersten Schnittebene 21; diese kann die Bewegung des Kopfstücks 8 durch Anliegen des der ersten Rohrleitung zugewandten frontseitigen Fase 22c des Kopfstücks 8 auf der Fase 22b des Zylinderabschnitts 4 vorteilhafterweise unterstützen. Die Ebene der Fase 22c, 22b und die Deckflächen 6, 15 können planparallel zueinander sein. Die zweite Ringfläche 10 mit ihrer Fase 22c liegt an der Fase 22b des Zylinderabschnitts 4 beweglich Fläche an Fläche an, die auch die Bewegung oder Drehung des Kopfstücks 8 mit der zweiten Rohrleitung 3 in der Muffe 2 der ersten Rohrleitung 1 erleichtern, so dass die erste Rohrleitung 1 mit ihrer Mitte-Längsachse A und die zweite Rohrleitung 3 mit ihrer Mitte-Längsachse B auf der Kreisbahn um die Hilfsmittelachse H ausgerichtet werden können. Zudem ist die zweite Ringfläche 10 z.B. mit ihrer Innenseite und die Innenseite 95 des Bereichs der Deckfläche des Zylinderabschnitts 4 so aneinander angepasst, dass im wesentlichen keine Kanten oder Erhebungen oder strömungsungünstige Toträume entstehen sowie ein strömungsmittelgünstige Gerinnes für die, beispielsweise mit Schwebstoffen belasteten, Flüssigkeiten, wie Abwässer, bereitgestellt ist.

Hinzukommend ist die erfindungsgemäße Rohrkupplung von geringer Baulänge, so dass die Maße der die erfindungsgemäße Rohrkupplung aufzunehmenden Aushebungen oder Schächte gering gehalten werden können.

Die erste und zweite Rohrleitungen 1, 3 können solche mit oder ohne rippenförmigen Erhebungen 90 auf ihrer Außenseite verwendet werden.

Die Dichtigkeit zwischen der ersten 1 und der zweiten Rohrleitung 3 wird unterstützt durch die Anordnung eines Dichtungsringes 25 in der Nut 25a des Kopfstücks 8. Die Nut 25a ist eine in Umlaufrichtung angeordnete umlaufende Ausnehmung, die den Dichtungsring 25 aufnimmt. Der Kreismittelpunkt des Dichtungsrings 25 fällt mit dem Kugelmittelpunkt K zusammen.

Je nach Beschaffenheit und Anforderungen an die erfindungsgemäße Rohrkupplung können auch weitere Dichtungsringe 25 bei Nuten, die beispielsweise parallel zueinander ausgerichtet sind, ein hohes Maß an Dichtigkeit hervorrufen.

Die zweite Rohrleitung 3 mit ihrer Mitte-Längsachse B und die Außenfläche 17 des Kopfstücks 8 sind derart zueinander ausgerichtet, dass die Mitte-Längsachse B den Kreismittelpunkt M der ersten Schnittebene 21 des Kopfstücks 8 schneidet und die zweite Schnittebene 20 mit der ersten 21 einen Neigungswinkel *β* von 11,25 ° einschließt, so dass im Längsschnitt die von den Ringflächen 9, 10 gebildeten Innenräume 28, 28a von dem von der Außenfläche 17 begrenzten Raum quasi versetzt angeordnet sind und das Kopfstück 8 auf der einen Seite eine größere Dicke D1 als die ihr gegenüberliegende Seite mit der Dicke D2 aufweisen kann.

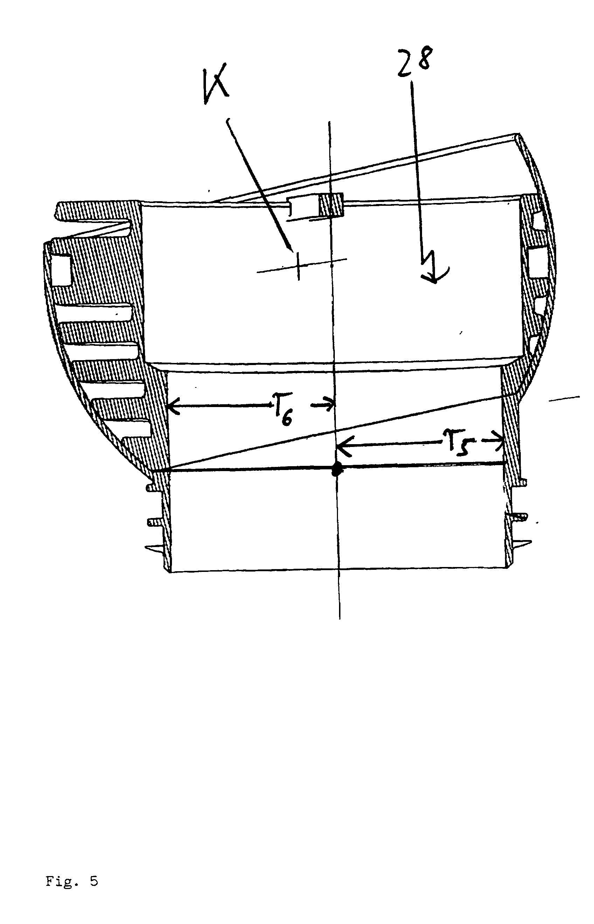

So sind z.B. bei Schwenkung bzw. Ausrichtung der Rohrleitung 1 mit Mantel 7 und Rohrleitung 3 mit Kopfstück 8 die Mitte-Längsachse A mit der Mitte-Längsachse B übereinstimmend, wobei die Abwinklung der ersten 1 von der zweiten Rohrleitung 3 gleich null und der Winkel λ gleich 0 (Fig. 5). Die Mitte-Längsachse B zu der Mitte-Längsachse A kann so ausgerichtet sein, dass das Ausmaß der Abwinklung der ersten 1 von der zweiten Rohrleitung 3 am größten ist, und der Winkel λ beträgt 22,5° (Fig.1); die Mitte-Längsachse B kann zu der Mitte-Längsachse A so ausgerichtet sein, dass der Winkel λ größer als 0 und kleiner als 22,5 °, hier weniger als 22,5° ist.

Der von der Mitte-Längsachse B und Hilfsmittelachse H umschlossene Winkel bleibt bei Schwenkung der Mitte-Längsachse B konstant, der von der Mitte-Längsachse B und der Mitte-Längsachse A umschlossen Winkel ist veränderbar.

Durch Drehung oder Schwenkung der zweiten Rohrleitung 3 in dem Innenraum 90a des Mantels 7 in jegliche Richtung wird ein strömungsmittelgünstiges Gerinne bereitgestellt und Winkellagen stufenlos für die zu koppelnden Rohrleitungen 1, 3 ermöglicht Auch zeichnet sich die erfindungsgemäße Rohrkupplung 1, 3 durch eine gewisse Toleranz gegenüber den beispielsweise durch Bodensenkung hervorgerufenen axial wirkenden Kräfte aus, so dass zwar die erfindungsgemäße Rohrkupplung durch Drehen oder Schwenken der beiden Rohrleitungen 1, 3 sich den Bodenbeschaffenheiten auch bei lang andauernder Benutzung anpaßt, ohne dass Undichtigkeiten wegen hinreichender Spannungsfreiheit der erfindungsgemäßen Rohrkupplung auftreten.

Die erfindungsgemäße Rohrkupplung des kugelmuffenartigen Typs kann im Abwassersektor verwendet werden. Die erfindungsgemäße Schachtbodenanordnung weist ein in einem Erdreich aufrechtstehendes, also vertikal ausgerichtetes Schachtrohr 62 auf, an welchem im unteren Bereich des Schachtrohrs 62 mindestens ein Rohr 63 als Schacht als Schachtverteilerrohr angeformt ist, welches mit dem Innenraum des Schachtrohrs 62 flüssigkeitsmäßig in Verbindung steht. An dem Rohr 63 ist eine erfindungsgemäße Rohrkupplung 65 gekoppelt.

Ebenso weist in einem weiteren Ausführungsbeispiel das dem Schachtrohr 62 einer erfindungsgemäßen Schachtbodenanordnung abgewandte Ende des Rohrs 63 ein Ende des schräg abgeschnittenen Typs und einen Zylinderabschnitt 4 mit einem Neigungswinkel α auf An das obere Ende des Zylinderabschnitts 4 schließt sich ein Mantel 7 des gleichförmigen Kugelscheibentyps als Muffe 2 zur Aufnahme des balligen Kopfstücks 8 einer zweiten Rohrleitung 3 an, welches in dem Mantel 7 beweglich gelagert ist. Als Schachtboden eignen sich Uponal-Schachtböden der Fa. Uponor Anger GmbH.

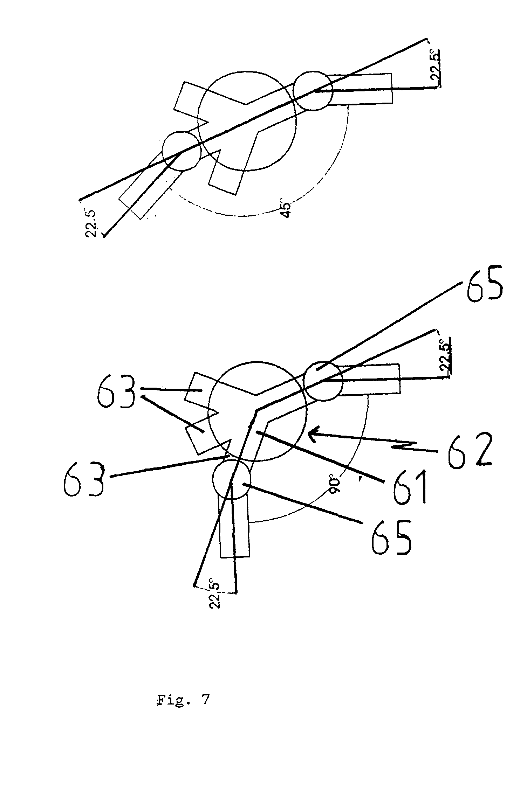

Die erfindungsgemäße Rohrkupplung hat einen inneren Kugelabschnitt mit einer exzentrischen Bohrung zur Aufnahme der zweiten Strömungsmittelleitung, z.B. solcher des Rohr-Typs ultra rib 1 oder ultra rib 2 oder KG der Fa. Uponor Anger GmbH bzw. Uponor (Deutschland) GmbH. In der kugelförmigen Muffe kann das Kopfende der zweiten Strömungsmittelleitung drehbar gelagert sein, wobei das Anschlussrohr der Muffe hinzutretend exzentrisch zur Muffe angeordnet sein kann. Diese Anordnung erlaubt eine stufenlose Einstellung von Winkeln im Bereich von 0 bis 22,5°, ohne dass Durchflussverringerungen oder Stufenbildung im Innern erzeugt werden. Die erfindungsgemäße Rohrkupplung bietet die Möglichkeit, Rohrleitungen unmittelbar an Schachtanschlüsse, stufenlos in Richtung und Gefälle verstellbar anzuschließen. Je nach Einlauf, je nachdem, an welchem der Einlauf die erfindungsgemäße Rohrkupplung angeschlossen wird, können Einstellwinkel von - 90° bis + 90° bereitgestellt werden (Fig. 7) unter Verwendung von z.B Schachtrohren, wie Mannloch-Einbauteilen der Fa. Uponor Anger GmbH oder Fa. Uponor (Deutschland) GmbH, mit angeformten Richtungsänderungen im Gerinne 61, rechts- und / oder linksseitig, beispielsweise durch an den aufrechtstehenden Schacht angeformte Zwillings- oder Drillingsrohre.

## Patentansprüche

1. Rohrkupplung mit einer ersten Strömungsmittelleitung ( 1 ) mit einer Muffe (2) und einer zweiten Strömungsmittelleitung (3) zur strömungsmitteldichten und strömungsmittelgünstigen Verbindung derselben, wobei die erste Strömungsmittelleitung (1) eine Mitte-Längsachse A und die zweite Strömungsmittelleitung (3) eine Mitte-Längsachse (B) haben und das eine Kopfende der zweiten Strömungsmittelleitung (3) in der Muffe (2) beweglich angeordnet ist, **dadurch gekennzeichnet, dass**
a. die erste Strömungsmittelleitung (1) eine des schräg abgeschnittenen Typs ist und an ihrem ersten Ende einen Zylinderabschnitt (4) mit einem Neigungswinkel α aufweist,
b an das obere Ende des Zylinderabschnitts (4) sich ein Mantel (7) des gleichförmigen Kugelscheibentyps als Muffe (2) anschließt,
c. die zweite Strömungsmittelleitung (3) an ihrem einen Kopfende mit einem balligen Kopfstück (8) versehen ist, welches in dem Mantel (7) beweglich gelagert ist, der Innenraum (28) des Kopfendes der zweiten Strömungsmittelleitung (3) zylinderförmig mit der Mitte-Längsachse B ausgebildet ist, das Kopfende der zweiten Strömungsmitteleitung (3) zwei Ringflächen (9, 10) in Richtung der Mitte-Längsachse B aufweist,
d. die zweite Ringfläche (10) eine des schräg abgeschnittenen Typs mit einem Neigungswinkel χ ist, der Betrag des Neigungswinkels χ mit dem Betrag des Neigungswinkels α übereinstimmt,
e. die Außenfläche (17) des Kopfstücks (8) von kugelscheibenartiger Ausbildung des ungleichförmigen Typs ist, die kugelscheibenartige Außenfläche (17) eine der ersten Strömungsmittelleitung (1) zugewandte erste Schnittebene (21) und eine der ersten Stromungsmittelleitung (1) abgewandte zweiten Schnittebene (20) hat, wobei vorzugsweise die Mitte-Längsachse B der zweiten Ringfläche (10) den Mittelpunkt M der der ersten Strömungsmittelleitung 1 zugewandten ersten Schnittebene (21) der Außenfläche (17) schneidet,
f. das Kopfstück (8) außenseitig einen in einer Nut (24) geführten umlaufenden Dichtungsring (25) hat,
g das Kopfstück (8) mit seiner Mitte-Längsachse B in dem Mantel (7) beweglich angeordnet ist, wobei die Mitte-Längsachse B die Mitte-Längsachse A der ersten Strömungsmittelleitung (1) unter Bildung des Winkels λ schneidet, die Summe aus den Neigungswinkeln α und χ dem Betrag des Winkels λ entspricht und der Kreismittelpunkt des Dichtungsrings (25) mit dem Kugelmittelpunkt K zusammenfällt.

2. Rohrkupplung nach Anspruch 1, **dadurch gekennzeichnet, dass** der Neigungswinkel α der Deckfläche (6) gegen die Grundfläche (5) des Zylinderabschnitts (4) 0 bis 11,25°, vorzugsweise 11,25°, beträgt.

3. Rohrkupplung nach Anspruch 1 oder 2, **dadurch gekennzeichnet, dass** der Neigungswinkel χ der der ersten Ringfläche (9) abgewandten Deckfläche (15) der zweiten Ringfläche (10) gegen die der ersten Ringfläche (9) zugewandten Grundfläche (14) der zweiten Ringfläche (10) 0 bis 11,25°, vorzugsweise 11,25°, beträgt.

4. Rohrkupplung nach einem der Ansprüche 1 bis 3, **dadurch gekennzeichnet, dass** der Durchmesser X des von der ersten Ringfläche (9) ausgebildeten Innenraums (28) größer als der Durchmesser Y des von der zweiten Ringfläche (10) ausgebildeten Innenraums (28a) ist.

5. Rohrkupplung nach Anspruch 4, **dadurch gekennzeichnet, dass** der Durchmesser X der Summe aus der zweifachen Wanddicke der zweiten Strömungsmittelleitung (3) und aus dem Durchmesser Y entspricht.

6. Rohrkupplung nach einem der Ansprüche 1 bis 5, **dadurch gekennzeichnet, dass** zwischen den Ringflächen (9, 10) ein abgeschrägter die beiden Ringflächen (9, 10) verbindender Ansatz (11) ausgebildet ist.

7. Rohrkupplung nach Anspruch 6, **dadurch gekennzeichnet, dass** der von der ersten Ringfläche (9) und dem Ansatz (11) ausgebildete Innenraum (28) die zweite Strömungsmittelleitung (3) aufnehmbar ausgebildet ist.

8. Rohrkupplung nach Anspruch 7, **dadurch gekennzeichnet, dass** die Außenseite (3a) der Strömungsmittelleitung (3) Fläche an Fläche an der ersten Ringfläche (9) und an der Fase ( 11a) des Ansatzes (11) anliegt.

9. Rohrkupplung nach einem der Ansprüche 1 bis 8, **dadurch gekennzeichnet, dass** die Innenseite (3c) der zweiten Strömungsmittelleitung (3) fluchtend und bündig mit der zweiten Ringfläche (10) ausgebildet ist.

10. Rohrkupplung nach einem der Ansprüche 1 bis 9, **dadurch gekennzeichnet, dass** die Mitte-Längsachse B nicht den Kugelmittelpunkt K schneidet, sondern von ihr beabstandet ist

11. Rohrkupplung nach einem der Ansprüche 1 bis 10, **dadurch gekennzeichnet, dass** die der ersten Strömungsmittelleitung (1) zugewandte Kante (22) des Kopfstücks (8) als Fase (22c) abgeschrägt ist und der Zylinderabschnitt (4) einen der zweiten Strömungsmittelleitung (3) zugewandten, oberen Rand (22a) aufweist, welcher als Fase (22b) abgeschrägt ist.

12. Rohrkupplung nach Anspruch 11, **dadurch gekennzeichnet, dass** die Ebene der Fase (22c) mit der Deckfläche (15) übereinstimmt.

13. Rohrkupplung nach Anspruch 11 oder 12, **dadurch gekennzeichnet, dass** die Ebene der Fase (22b) mit der Deckfläche (6) übereinstimmt.

14. Rohrkupplung nach einem der Ansprüche 11 bis 13, **dadurch gekennzeichnet, dass** die Fase (22b) des Kopfstücks (8) an dem Rand (22a) des Zylinderabschnitts (4) Fläche an Fläche beweglich anliegt.

15. Rohrkupplung nach einem der Ansprüche 1 bis 14, **dadurch gekennzeichnet, dass** die Fase (22) und der Rand (22a) Fläche an Fläche anliegen.

16. Rohrkupplung nach einem der Ansprüche 1 bis 15, **dadurch gekennzeichnet, dass** das Kopfstück (8) mit seiner Außenfläche (17) an der Innenfläche (80) des Mantels (7) derart beweglich angeordnet ist, dass die Mitte-Längsachsen A und B kreisförmig um eine Hilfsmittelachse H unabhängig voneinander rotierbar sind.

17. Rohrkupplung nach einem der Ansprüche 1 bis 16, **dadurch gekennzeichnet, dass** das Kopfstück (8) des ungleichförmigen Kugelscheibentyps mit der ersten (20) und der zweiten Schnittebene (21) ausgebildet ist, wobei die Schnittebenen (20, 21) einen Neigungswinkel *β* einschließen.

18. Rohrkupplung nach Anspruch 17, **dadurch gekennzeichnet, dass** der Neigungswinkel *β* der ersten Schnittebene (21) gegen die zweite Schnittebene (20) 2 bis 11,25°, vorzugsweise 11,25°, beträgt.

19. Rohrkupplung nach einem der Ansprüche 1 bis 18, **dadurch gekennzeichnet, dass** der Mantel (7) des gleichförmigen Kugelscheibentyps parallele Schnittebenen (41, 40) hat, wobei die der zweiten Strömungsmittelleitung (3) zugewandte Schnittebene (40) einen größeren Radius r4 als die der zweiten Strömungsmittelleitung (3) abgewandte Schnittebene (41) mit dem Radius r3 hat.

20. Rohrkupplung nach einem der Ansprüche 1 bis 19, **dadurch gekennzeichnet, dass** die erste Strömungsmittelleitung (1) mit dem Mantel (7) werkstoffeinstückig ist.

21. Rohrkupplung nach einem der Ansprüche 1 bis 20, **dadurch gekennzeichnet, dass** die zweite Strömungsmittelleitung (3) mit dem Kopfstück (8) werkstoffeinstückig ist.

22. Schachtbodenanordnung mit einem aufrechtstehenden Schachtrohr (62), an welchem im unteren Bereich des Schachtrohrs (62) mindestens ein Rohr (63) angeformt ist, welches mit dem Innenraum des Schachtrohrs (62) flüssigkeitsmäßig in Verbindung steht, **dadurch gekennzeichnet, dass** an dem Rohr (63) mindestens eine Rohrkupplung (65) nach einem der Ansprüche 1 bis 21 gekoppelt ist.

## Claims

1. Pipe coupling having a first fluid line (1) with a sleeve (2), and a second fluid line (3) to allow a fluid-tight and fluid-flow promoting connection of the same, with the first fluid line (1) having a central longitudinal axis A and the second fluid line (3) having a central longitudinal axis (B) and one head end of the second fluid line (3) being movably located in the sleeve (2), ***characterised in that***
a. the first fluid line (1) is of a bevelled type and has at its first end a cylinder section (4) with an angle of inclination α,
b. a casing (7) of the uniform spherical washer type is connected to the upper end of the cylinder section (4) as a sleeve (2),
c. the second fluid line (3) is provided at one of its head ends with a spherical head piece (8) which is movably supported in the casing (7), the inner chamber (28) of the head end of the second fluid line (3) is configured cylindrically with the central longitudinal axis B, the head end of the second fluid line (3) has two annular surfaces (9, 10) in the direction of the central longitudinal axis B,
d. the second annular surface (10) is of a bevelled type with an angle of inclination χ, the value of the angle of inclination χ corresponding to the value of the angle of inclination α,
e. the outer surface (17) of the head piece (8) is of the non-uniform type with spherical washer, the spherical washer-like outer surface (17) has a first sectional plane (21) facing towards the first fluid line (1) and a second sectional plane (20) facing away from the first fluid line (1), with the central longitudinal axis B of the second annular surface (10) preferably intersecting the centre M of the first sectional plane (21) of the outer surface (17) facing towards the first fluid line 1,
f. the head piece (8) has a continuous sealing ring (25) guided in a groove (24) externally,
g. the head piece (8) is movably located with its central longitudinal axis B in the casing (7), with the central longitudinal axis B intersecting the central longitudinal axis A of the first fluid line (1) forming the angle λ, the sum of the angles of inclination α and χ corresponding to the value of the angle χ and the centre of the circle of the sealing ring (25) coinciding with the centre of the sphere K.

2. Pipe coupling as claimed in Claim 1, ***characterised in that*** the angle of inclination α between the top surface (6) and the base (5) of the cylinder section (4) is 0 to 11.25°, preferably 11.25°.

3. Pipe coupling as claimed in Claim 1 or 2, ***characterised in that*** the angle of inclination χ between the top surface (15) of the second annular surface (10) facing away from the first annular surface (9) and the base (14) of the second annular surface (10) facing towards the first annular surface (10) is 0 to 11.25°, preferably 11.25°.

4. Pipe coupling as claimed in any one of Claims 1 to 3, ***characterised in that*** the diameter X of the inner chamber (28) formed by the first annular surface (9) is greater than the diameter Y of the inner chamber (28a) formed by the second annular surface (10).

5. *Pipe coupling as claimed in Claim 4*, **characterised in that** the diameter X corresponds to the sum of double the wall thickness of the second fluid line (3) and diameter Y.

6. Pipe coupling as claimed in any one of Claims 1 to 5, ***characterised in that*** a bevelled projection (11) connecting the two annular surfaces (9, 10) is formed between the annular surfaces (9, 10).

7. Pipe coupling as claimed in Claim 6, ***characterised in that*** the inner chamber (28) formed by the first annular surface (9) and the projection (11) is designed to accommodate the second fluid line (3).

8. Pipe coupling as claimed in Claim 7, ***characterised in that*** the outer side (3a) of the fluid line (3) lies in surface-to-surface contact with the first annular surface (9) and with the bevel (11a) of the projection (11).

9. Pipe coupling as claimed in any one of Claims 1 to 8, ***characterised in that*** the inner side (3c) of the second fluid line (3) is formed in alignment and flush with the second annular surface (10).

10. Pipe coupling as claimed in any one of Claims 1 to 9, ***characterised in that*** the central longitudinal axis B does not intersect the centre of the sphere K, but is located at a distance therefrom.

11. Pipe coupling as claimed in any one of Claims 1 to 10, ***characterised in that*** the edge (22) of the head piece (8) facing towards the first fluid line (1) is chamfered as a bevel (22c) and the cylinder section (4) has an upper edge (22a) facing towards the second fluid line (3), which is chamfered as a bevel (22b).

12. Pipe coupling as claimed in Claim 11, ***characterised in that*** the plane of the bevel (22c) corresponds to the top surface (15).

13. Pipe coupling as claimed in Claim 11 or 12, ***characterised in that*** the plane of the bevel (22b) corresponds to the top surface (6).

14. Pipe coupling as claimed in any one of Claims 11 to 13, ***characterised in that*** the bevel (22b) of the head piece (8) lies movably in surface-to-surface contact with the edge (22a) of the cylinder section (4).

15. Pipe coupling as claimed in any one of Claims 1 to 14, ***characterised in that*** the bevel (22) and the edge (22a) lie in surface-to-surface contact.

16. Pipe coupling as claimed in any one of Claims 1 to 15, ***characterised in that*** the head piece (8) with its outer surface (17) is located movably on the inner surface (80) of the casing (7) such that the central longitudinal axes A and B can be rotated circularly about an auxiliary central axis H independently of each other.

17. Pipe coupling as claimed in any one of Claims 1 to 16, ***characterised in that*** the head piece (8) of the non-uniform spherical washer type is formed with the first (20) and the second sectional plane (21), with the sectional planes (20, 21) enclosing an angle of inclination β.

18. Pipe coupling as claimed in Claim 17, ***characterised in that*** the angle of inclination β between the first sectional plane (21) and the second sectional plane (20) is 2 to 11.25°, preferably 11.25°.

19. Pipe coupling as claimed in any one of Claims 1 to 18, ***characterised in that*** the casing (7) of the uniform spherical washer type has parallel sectional planes (41, 40), with the sectional plane (40) facing towards the second fluid line (3) having a larger radius r4 than the sectional plane (41) facing away from the second fluid line (3) with radius r3.

20. Pipe coupling as claimed in any one of Claims 1 to 19, ***characterised in that*** the first fluid line (1) is integrally formed with the casing (7).

21. Pipe coupling as claimed in any one of Claims 1 to 20, ***characterised in that*** the second fluid line (3) is integrally formed with the head piece (8).

22. Shaft bottom arrangement with an upright shaft pipe (62), on which at least one pipe (63) is moulded in the lower area of the shaft pipe (62), which is in fluid communication with the inner chamber of the shaft pipe (62), ***characterised in that*** at least one pipe coupling (65) as claimed in any one of Claims 1 to 21 is coupled to the pipe (63).

## Revendications

1. Accouplement de tube comprenant une première conduite de fluide (1) comportant un manchon (2) et une seconde conduite de fluide (3) permettant la liaison à celle-ci de façon étanche et favorable au fluide, la première conduite de fluide (1) présentant un axe longitudinal médian (A) et la seconde conduite de fluide (3) présentant un axe longitudinal médian (B), et une extrémité de tête de la seconde conduite de fluide (3) étant disposée dans le manchon (2) de façon à pouvoir être déplacée, **caractérisé en ce que**
a. la première conduite de fluide (1) est une conduite de type découpé en biseau et présente au niveau de sa première extrémité un segment cylindrique (4) possédant un angle d'inclinaison α,
b. au niveau de l'extrémité supérieure du segment cylindrique (4), une chemise (7) de même forme, de type à rondelle à portée sphérique, se raccorde en tant que manchon (2),
c. la seconde conduite de fluide (3) est pourvue, au niveau de son extrémité de tête, d'un élément de tête (8) bombé qui est logé de façon mobile dans la chemise (7), l'espace interne (28) de l'extrémité de tête de la seconde conduite de fluide (3) étant réalisé sous forme d'un cylindre possédant l'axe longitudinal médian B, l'extrémité de tête de la seconde conduite de fluide (3) possédant deux surfaces annulaires (9, 10) dans la direction de l'axe longitudinal médian B,
d. la seconde surface annulaire (10) est une surface de type découpé en biseau présentant un angle d'inclinaison χ, la valeur de l'angle d'inclinaison χ coïncidant avec la valeur de l'angle d'inclinaison α,
e. la surface externe (17) de l'élément de tête (8) est de conception de type à rondelle à portée sphérique de type irrégulier, la surface externe (17) de type à rondelle à portée sphérique présentant un premier plan d'intersection (21) orienté vers la première conduite de fluide (1) et un second plan d'intersection (20) opposé à la première conduite de fluide (1), l'axe longitudinal médian B de la seconde surface annulaire (10) coupant de préférence le centre M du premier plan d'intersection (21) de la surface externe (17) orienté vers la première conduite de fluide (1),
f. l'élément de tête (8) présente côté externe une garniture d'étanchéité périphérique (25) amenée dans une rainure (24),
g. l'élément de tête (8) est disposé de façon mobile avec son axe longitudinal médian B dans la chemise (7), l'axe longitudinal médian B coupant l'axe longitudinal médian A de la première conduite de fluide (1) en formant l'angle λ, la somme des angles d'inclinaison α et χ correspondant à la valeur de l'angle λ et le centre de la garniture d'étanchéité (25) coïncidant avec le centre de la sphère K.

2. Accouplement de tube selon la revendication 1, **caractérisé en ce que** l'angle d'inclinaison α de la surface de recouvrement (6) à la surface de base (5) du segment cylindrique (4) est compris entre 0 et 11,25°, et est de préférence de 11,25°.

3. Accouplement de tube selon la revendication 1 ou 2, **caractérisé en ce que** l'angle d'inclinaison χ entre la surface de recouvrement (15), opposée à la surface annulaire (9), de la seconde surface annulaire (10) et la surface de base (14), orientée vers la première surface annulaire (9), de la seconde surface annulaire (10) est compris entre 0 et 11,25°, et est de préférence de 11,25°.

4. Accouplement de tube selon l'une des revendications 1 à 3, **caractérisé en ce que** le diamètre X de l'espace interne (28) formé depuis la première surface annulaire (9) est supérieur au diamètre Y de l'espace interne (28a) formé depuis la seconde surface annulaire (10).

5. Accouplement de tube selon la revendication 4, **caractérisé en ce que** le diamètre X correspond à la somme du double de l'épaisseur de paroi de la seconde conduite de fluide (3) et du diamètre Y.

6. Accouplement de tube selon l'une des revendications 1 à 5, **caractérisé en ce qu'**entre les surfaces annulaires (9, 10) est formée une tubulure (11) chanfreinée reliant les deux surfaces annulaires (9, 10).

7. Accouplement de tube selon la revendication 6, **caractérisé en ce que** l'espace interne (28) formé par la première surface annulaire (9) et la tubulure (11) est conçu pour loger la seconde conduite de fluide (3).

8. Accouplement de tube selon la revendication 7, **caractérisé en ce que** le côté externe (3a) de la conduite de fluide (3) repose surface contre surface au niveau de la première surface annulaire (9) et du chanfrein (11a) de la tubulure (11).

9. Accouplement de tube selon l'une des revendications 1 à 8, **caractérisé en ce que** le côté interne (3c) de la seconde conduite de fluide (3) est formé de façon à être aligné et nivelé avec la seconde surface annulaire (10).

10. Accouplement de tube selon l'une des revendications 1 à 9, **caractérisé en ce que** l'axe longitudinal médian B ne coupe pas le centre K mais est distant de celui-ci.

11. Accouplement de tube selon l'une des revendications 1 à 10, **caractérisé en ce que** l'arête (22) de l'élément de tête (8), orientée vers la première conduite de fluide (1), est biseautée en tant que chanfrein (22c) et **en ce que** le segment cylindrique (4) présente un bord supérieur (22a), orienté vers la seconde conduite de fluide (3), qui est biseauté en tant que chanfrein (22b).

12. Accouplement de tube selon la revendication 11, **caractérisé en ce que** le plan du chanfrein (22c) coïncide avec la surface de recouvrement (15).

13. Accouplement de tube selon la revendication 11 ou 12, **caractérisé en ce que** le plan du chanfrein (22b) coïncide avec la surface de recouvrement (6).

14. Accouplement de tube selon l'une des revendications 11 à 13, **caractérisé en ce que** le chanfrein (22b) de l'élément de tête (8) repose de façon mobile, surface contre surface, au niveau du bord (22a) du segment cylindrique (4).

15. Accouplement de tube selon l'une des revendications 1 à 14, **caractérisé en ce que** le chanfrein (22) et le bord (22a) reposent surface contre surface.

16. Accouplement de tube selon l'une des revendications 1 à 15, **caractérisé en ce que** l'élément de tête (8) est disposé de façon mobile avec sa surface externe (17) contre la surface interne (80) de la chemise (7), de façon telle que les axes longitudinaux médians A et B peuvent pivoter selon un cercle autour d'un axe auxiliaire H, indépendamment l'un de l'autre.

17. Accouplement de tube selon l'une des revendications 1 à 16, **caractérisé en ce que** l'élément de tête (8) du type à rondelle à portée sphérique irrégulière est formé avec le premier (20) et le second (21) plans d'intersection, les plans d'intersection (20, 21) formant un angle d'inclinaison β.

18. Accouplement de tube selon la revendication 17, **caractérisé en ce que** l'angle d'inclinaison β entre le premier plan d'intersection (21) et le second plan d'intersection (20) est compris entre 2 et 11,25°, et est de préférence de 11,25°.

19. Accouplement de tube selon l'une des revendications 1 à 18, **caractérisé en ce que** la chemise (7) du type à rondelle à portée sphérique de même forme possède des plans d'intersection parallèles (41, 40), le plan d'intersection (40) orienté vers la seconde conduite de fluide (3) ayant un rayon r4 supérieur au rayon r3 du plan de coupe (41) opposé à la seconde conduite de fluide (3).

20. Accouplement de tube selon l'une des revendications 1 à 19, **caractérisé en ce que** la première conduite de fluide (1) est formée dans un matériau monobloc avec la chemise (7).

21. Accouplement de tube selon l'une des revendications 1 à 20, **caractérisé en ce que** la seconde conduite de fluide (3) est formée dans un matériau monobloc avec l'élément de tête (8).

22. Installation au sol de cuve présentant une cheminée de cuve (62) au niveau de laquelle est formé, dans la zone inférieure de la cheminée de cuve (62), au moins un tube (63) qui se trouve en relation fluidique avec l'espace interne de la cheminée de cuve (62), **caractérisée en ce qu'**est raccordé au tube (63) au moins un accouplement de tube (65) selon l'une des revendications 1 à 21.
